# EUROPEAN PATENT APPLICATION

(11) **EP 2 362 479 A1**
(43) Date of publication of application: **31.08.2011**
(21) Application number: 11156022.3
(22) Date of filing: 25.02.2011
(51) Int. Cl.: H01M 10/42, H01M 10/44

(54) **Power storage system**

(30) Priority: 25.02.2010 JP 2010039911; 29.10.2010 JP 2010243652
(71) Applicant: SANYO ELECTRIC CO., LTD., Moriguchi-shi, Osaka 570-8677 (JP)
(72) Inventor: Saruhashi, Koichi, Moriguchi-shi Osaka 570-8677 (JP); Hataya, Daisuke, Moriguchi-shi Osaka 570-8677 (JP)
(74) Representative: Glawe, Delfs, Moll

(57) **Abstract**

A power storage system is provided. A control apparatus controls the power storage system to perform a charging mode in which an assembled battery is charged in a first predetermined time period and a discharging mode in which the assembled battery is discharged in a second predetermined time period. A residual electric power amount determination unit detects an amount of one of electric current and electric power currently remaining in the assembled battery. A discharged electric power amount determination unit detects an amount of one of electric current and electric power discharged from the assembled battery during the second predetermined time period. The control apparatus estimates an amount of one of electric current and electric power discharged from the assembled battery during a next second predetermined time period based on amounts of one of electric current and electric power having been discharged from the assembled battery during past second predetermined time periods to obtain an estimated value. A correction control unit controls the power storage system not to perform the charging mode in a next first predetermined time period if the estimated value is less than the amount of one of electric current and electric power currently remaining in the assembled battery.

## Description

The disclosure of Japanese Patent Applications No. 2010-039911 filed on February 25, 2010 and No. 2010-243652 filed on October 29, 2010, including specifications, drawings and claims is incorporated herein by reference in its entirety.

### BACKGROUND

The present invention relates to a power storage system including an assembled battery which is chargeable and dischargeable.

There is a system including a storage battery which is connected to a commercial electric power system so that the storage battery is charged with commercial electric power supplied from the system during nighttime and is discharged to supply electric power during daytime (for example, refer to JP-A-2006-149037).

In general, in the system using the above storage battery, the storage battery is charged up to the rating capacity (fully charged) everyday.

However, daytime electric power demand significantly varies with seasons or the other various factors, and the capacity of the storage battery is often determined based at a point in time with a large demand as a standard. Therefore, in practice, it is not the case that the storage battery needs to be fully charged everyday, and it is likely that the storage battery stores a larger amount of electric power than required.

### SUMMARY

It is therefore an object of at least one embodiment of the present invention to optimize the amount of electric power to be charged in a storage battery in a configuration in which the storage battery is charged with electric power supplied from a system and the electric power charged in the storage battery is supplied to loads.

In order to achieve the above-described object, according to an aspect of the embodiments of the present invention, there is provided a power storage system, comprising: an assembled battery which is chargeable and dischargeable and is comprised of a plurality of battery modules; a control apparatus that controls the power storage system to perform a charging mode in which the assembled battery is charged in a first predetermined time period and a discharging mode in which the assembled battery is discharged in a second predetermined time period; a residual electric power amount determination unit that detects an amount of one of electric current and electric power currently remaining in the assembled battery; and a discharged electric power amount determination unit that detects an amount of one of electric current and electric power discharged from the assembled battery during the second predetermined time period in which the discharging mode is performed, wherein the control apparatus estimates an amount of one of electric current and electric power being charged to the assembled battery during a next first predetermined time period in which the charging mode is to be performed based on amounts of one of electric current and electric power having been discharged from the assembled battery during past second predetermined time periods in which the discharging mode has been performed, detected by the discharged electric power amount determination unit to obtain an estimated value, and wherein the power storage system further comprises a correction control unit that controls the power storage system not to perform the charging mode in a next first predetermined time period if the estimated amount is less than the amount of one of electric current and electric power currently remaining in the assembled battery, detected by the residual electric power amount determination unit.

In the power storage system, the control apparatus may control the power storage system to alternately perform the charging mode and the discharging mode.

In the power storage system, the first predetermined time period may be overlapped with at least a time period in nighttime.

In the power storage system, the correction control unit may add a minimum value of an amount of one of electric current and electric power to be remained in the assembled battery to the estimated amount and then compare the sum with the amount of one of electric current and electric power currently remaining in the assembled battery.

In the power storage system, the correction control unit may control the power storage system not to perform the charging mode in the next first predetermined time period if the amount of one of electric current and electric power currently remaining in the assembled battery, detected by the residual electric power amount determination unit is equal to or more than half of a full capacity of the assembled battery.

In the power storage system, the discharged electric power amount determination unit may detect the amount of one of electric current and electric power discharged from the assembled battery during the second predetermined time period based on the amount of one of electric current and electric power remaining in the assembled battery at the beginning of the second predetermined time period, detected by the residual electric power amount determination unit and the amount of one of electric current and electric power remaining in the assembled battery at the end of the first predetermined time period, detected by the residual electric power amount determination unit, and the control apparatus may obtain the estimated value based on an average value of the amounts of one of electric current and electric power having been discharged from the assembled battery during the past second predetermined time periods, detected by the discharged electric power amount determination unit and a standard deviation thereof.

The power storage system may further comprises a charging circuit that charged the assembled battery with electric power supplied from a system; and at least one of a conversion circuit that converts the electric power charged in the assembled battery to an alternating current with a frequency corresponding to an alternating load and then supplies the alternating current to the alternating load, and a conversion circuit that converts the electric power charged in the assembled battery to a voltage corresponding to a direct load and then supplies the voltage to the direct load, wherein the power storage system repeatedly performs the charging mode and the discharging mode.

According to the present invention, it is possible to optimize the amount of electric power to be charged in the storage battery by determining the amount of electric power to be charged according to electric power demand. In addition, it is possible to extend the service life of the storage battery by suppressing the number of times of charging and discharging in the storage battery.

### BRIEF DESCRIPTION OF THE DRAWINGS

In the accompanying drawings:
Fig. 1 is a schematic view illustrating the configuration of the power storage system according to an embodiment of the present invention;
Fig. 2 is a flowchart illustrating the operation of the control apparatus of the power storage system according to the embodiment; and
Figs. 3A to 3C are schematic views illustrating specific examples of charging operations.

### DETAILED DESCRIPTION OF THE EMBODIMENTS

Hereinafter, an embodiment of the present invention will be described with reference to the accompanying drawings.

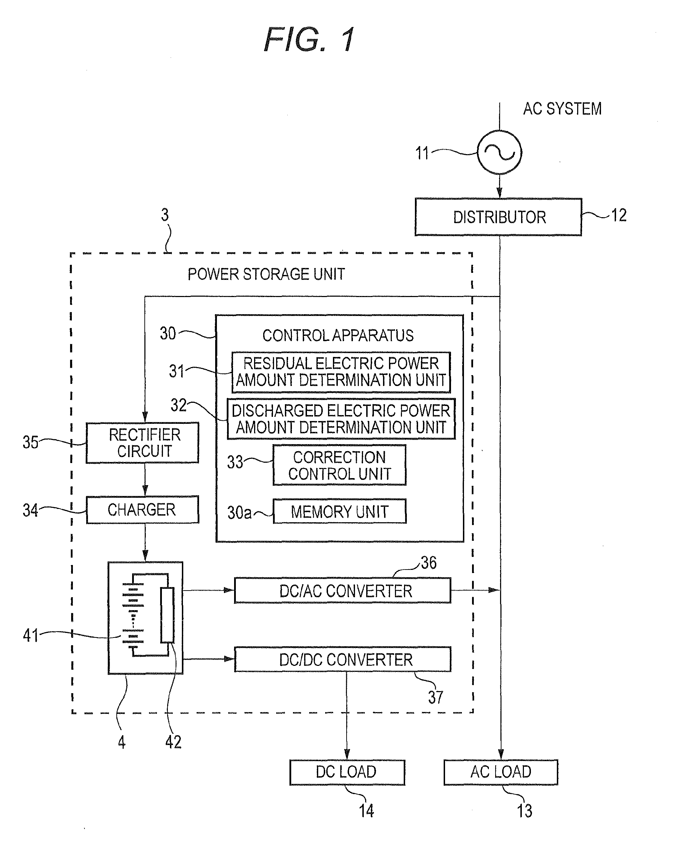

Fig. 1 is a schematic view illustrating the configuration of the power storage system 1 according to an embodiment to which the present invention is applied.

The power storage system 1 illustrated in Fig. 1 is provided with a commercial electric power system 11 supplied by a grid and a power storage unit 3 including an assembled battery 4 which is to be charged with electric power supplied from the commercial electric power system 11.

The commercial electric power system 11 is connected to the power storage unit 3 and an AC load 13 which is operated by alternating current power through a distributor 12 including a current-limiting breaker and a reverse current flow preventer which are now shown. The commercial electric power system 11 supplies an alternating current power to the power storage unit 3 and the AC load 13. Examples of the AC load 13 include lighting apparatuses, air conditioning apparatuses, office equipment, a variety of electric home appliances.

The power storage unit 3 includes the assembled battery 4 and a charger 34 that charges the assembled battery 4, and the charger 34 is connected to the commercial electric power system 11 through a rectifier circuit 35. The rectifier circuit 35 converts an alternating current power from the commercial electric power system 11 to a direct current and supplies the direct current to the charger 34, and the charger 34 charges the assembled battery 4 with the direct current. The charger 34 and the rectifier circuit 35 constitute a charging circuit of the assembled battery 4.

The assembled battery 4 includes a plurality of battery modules 41 which are connected to each other in series and/or parallel and a controller 42 that monitors the temperature or voltage of the battery modules 41 or the electric current in the assembled battery 4. The battery modules 41 are secondary battery modules such as a lithium ion battery, a nickel hydrogen battery or the like, and the embodiment will describe a case in which the lithium ion battery modules are used.

The controller 42 detects the temperature of the batter modules 41 and stops charging and discharging when the detected temperature is above a predetermined value. The controller 42 also detects the voltage between both ends of the plurality of battery modules 41 connected in series, calculates the Relative State Of Charge (RSOC) based on the detected voltage values or electric current values and outputs the measured values, RSOC data or the like to an external control unit which is connected to the assembled battery 4.

A DC/AC converter 36 is connected to the assembled battery 4, and the direct current power discharged from the assembled battery 4 is converted to an alternating current by the DC/AC converter 36 and then output to the AC load 13. In addition, a DC/DC converter 37 is connected to the assembled battery 4 and direct current power from the assembled battery 4 is converted to direct current power with a predetermined voltage through the DC/DC converter 37 and then is supplied to a DC load 14. Examples of the DC load 14 include a direct current home appliance which is operated by the direct current power.

On the other hand, the power storage unit 3 includes a control apparatus 30 that controls charging and discharging of the assembled battery 4. The power storage unit 3 alternately performs a charging mode in which the assembled battery 4 is charged with the electric power supplied from the system during nighttime and a discharging mode in which the assembled battery 4 is discharged mainly during a time period in which the electric power demand of the AC load 13 and the DC load 14 increases. The control apparatus 30 is set to perform the charging mode during a time period in which electric power demand is relatively small (for example, from 11 pm to 7 am or from 10 pm to 8 am). In addition, it is set to perform the discharging mode during other than the time period in which the charging mode is performed (for example, from 7 am to 11 pm or from 8 am to 10 pm).

The control apparatus 30 includes a residual electric power amount determination unit 31 that obtains the residual capacity of stored electric charges (and/or stored electric power amount) in the assembled battery 4, a discharged electric power amount determination unit 32 that obtains the amount of electric power and/or the amount of electric current discharged from the assembled battery 4 based on the residual capacity of the assembled battery 4, obtained by the residual electric power amount determination unit 31 when finishing the charging mode and the residual capacity of the assembled battery 4, obtained by the residual electric power amount determination unit 31 when starting the next charging mode, a correction control unit 33 that controls the charging operation of the assembled battery 4 based on the amount of electric power and/or the amount of electric current obtained by the discharged electric power amount determination unit 32, and a memory unit 30a that stores the residual capacity of the assembled battery 4, obtained by the residual electric power amount determination unit 31 and the amount of discharged electric power and/or the amount of discharged electric current obtained by the discharged electric power amount determination unit 32. In addition, the control apparatus 30 includes a clock so that the residual electric power amount determination unit 31, the discharged electric power amount determination unit 32 and the correction control unit 33 can obtain the current time.

Although the discharged electric power amount determination unit 32 obtains the amount of electric power and/or the amount of electric current discharged from the assembled battery 4 and the correction control unit 33 controls the charging operation of the assembled battery 4 based on the amount of electric power and/or the amount of electric current obtained by the discharged electric power amount determination unit 32, in the present embodiment to be described below, the case of performing the operation based on the amount of electric power discharged from the assembled battery 4 will be described. However, it is definitely possible to perform the operation based on the amount of electric current discharged from the assembled battery 4.

The residual electric power amount determination unit 31 obtains the RSOC data output from the controller 42 in the assembled battery 4 at the beginning of the charging mode or before and after thereof, and at the end of the charging mode, before and after thereof, or at the time of completing charging so as to detect and determine the residual capacity of the assembled battery 4. The residual electric power amount determination unit 31 stores the residual capacity of the assembled battery 4 together with detection times in the memory unit 30a.

The discharged electric power amount determination unit 32 obtains the residual capacity of the assembled battery 4, detected by the residual electric power amount determination unit 31 and stored in the memory unit 30a and calculates the difference between the residual capacity detected at the end of the charging mode and the residual capacity detected at the beginning of the charging mode for that night so as to obtain the amount of electric power discharged. What is obtained herein is the amount of electric power discharged in the discharging mode for a single day, and the discharged electric power amount determination unit 32 stores the obtained amount of electric power discharged in the memory unit 30a with the corresponding date. The memory unit 30a is capable of storing the amount of electric power discharged everyday for at least a week (for 7 days).

In addition, the correction control unit 33 performs a calculation treatment based on the amounts of electric power discharged for recent several days, which are stored in the memory unit 30a, and estimates the amount of electric power discharged for the next day to obtain an estimated value. Specifically, the average value of the amounts of electric power discharged for recent 7 days and the standard deviation thereof are obtained, and the estimated value is obtained by summing the average value and the standard deviation. Since the estimated value includes the standard deviation which corresponds to a variation range added to the average value of the amount of electric power discharged, it is possible to reduce the risk of the estimated value falling significantly below the actual amount of electric power discharged.

In addition, the correction control unit 33 compares the estimated value of the amount of electric power discharged for the next day (i.e. the sum of the average value and the standard deviation) and the residual capacity of the assembled battery 4. If the residual capacity of the assembled battery 4 is equal to or more than the estimated value, the correction control unit 33 controls the power storage unit 3 not to perform the charging mode in the time period of the corresponding day, in which the charging mode is supposed to be performed. More specifically, the correction control unit 33 compares a value obtained by adding the minimum residual amount of the assembled battery 4 to the estimated value of the amount of electric power discharged for the next day with the residual capacity of the assembled battery 4, and does not perform the charging mode if the residual capacity of the assembled battery 4 is equal to or more than the value.

The minimum residual amount of the assembled battery 4 refers to a residual capacity which is set as a residual capacity that has to be remained in the battery modules 41 at all times. A battery (particularly, lithium ion battery) used for the battery modules 41 becomes degraded with charging and discharging cycles to the extent of the amount of charge. Therefore, in the power storage system 1, a minimum residual amount (a minimum value of an amount of electric power to be remained in the assembled battery 4) is set in advance to prevent the depth of discharge from deepening excessively while the charging mode and the discharging mode are performed alternately, and the correction control unit 33 controls the charging operation such that the residual capacity of the assembled battery 4 does not fall below the set minimum residual amount. Thereby, it is possible to effectively postpone degradation of the battery module 41 and thus achieve a longer service life.

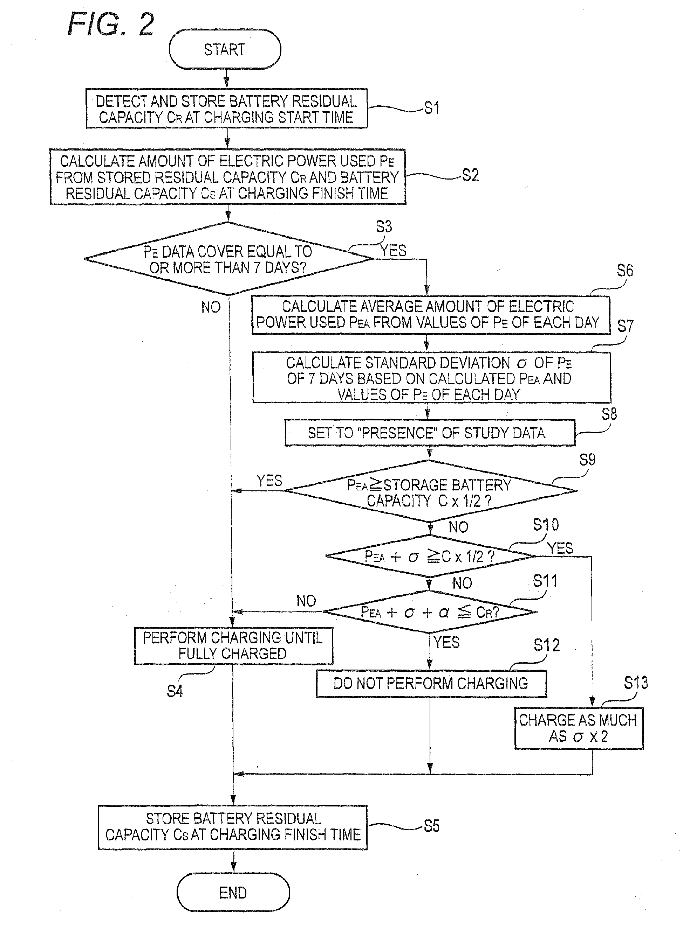

Fig. 2 is a flowchart illustrating the operation of the control apparatus 30 of the power storage system.

The operation illustrated in Fig. 2 is started at or before the beginning of the charging mode (the charging starting time). Meanwhile, in the description below, the capacity of the assembled battery 4 is represented by the letter C; the residual capacity of the assembled battery 4 at the charging starting time which is obtained by the residual electric power amount determination unit 31 is represented by the letters C_{R}; the residual capacity of the assembled battery 4 at the charging finishing time which is obtained by the residual electric power amount determination unit 31 is represented by the letters C_{S}; the amount of electric power used in the discharging mode of a single day which is obtained by the discharged electric power amount determination unit 32 is represented by the letters P_{E}; the average amount of electric power used obtained by the correction control unit 33 from the amounts of electric power used for a plurality of days is represented by the letters P_{EA}; and the standard deviation thereof is represented by the letter σ.

In the operation illustrated in Fig.2, the residual electric power amount determination unit 31 in the control apparatus 30 obtains the residual capacity C_{R} of the assembled battery 4 at the charging starting time (for example, at 11 pm) and stores the C_{R} in the memory unit 30a (Step S1). Subsequently, the discharged electric power amount determination unit 32 calculates the amount of electric power used P_{E} in the discharging mode of the corresponding day based on the residual capacity C_{R} at the charging starting time detected and stored in the memory unit 30a by the residual electric power amount determination unit 31 and the residual capacity C_{S} detected at the charging finishing time of the corresponding day (for example, at 7 am) and stored in the memory unit 30a by the residual electric power amount determination unit 31 and stores the P_{E} in the memory unit 30a with the corresponding date (Step S2).

Next, the correction control unit 33 in the control apparatus 30 determines whether the memory unit 30a stores the data of the amount of electric power used P_{E} for more than 7 days (Step S3). Here, in a case in which the memory unit 30a stores the amounts of electric power used P_{E} for less than 7 days or no amount of electric power used P_{E} (Step 3; No), the correction control unit 33 controls the charger 34 to fully charge the assembled battery 4 (Step 4). The residual electric power amount determination unit 31 obtains the residual capacity C_{S} of the assembled battery 4 at the time of finishing the charging mode or when actually finishing charging, and stores the residual capacity C_{S} in the memory unit 30a (Step S5), whereby the power storage system 1 finishes the operation of Fig. 2 and moves to the discharging mode.

On the other hand, in a case in which the memory unit 30a stores the amounts of electric power used P_{E} for more than or equal to 7 days (Step S3; Yes), the correction control unit 33 calculates the average amount of electric power used P_{EA} which is the average value of the amounts of electric power used for 7 days and, furthermore, calculates the standard deviation σ of the amounts of electric power used P_{E} for 7 days based on the calculated average amount of electric power used P_{EA} and the amount of electric power used P_{E} for each of the 7 days (Step S7), and then the correction control unit 33 places a flag indicating the presence of the study data of the amount of electric power used P_{E} stored in the memory unit 30a (Step S8).

Next, the correction control unit 33 determines whether the average amount of electric power used P_{EA} is equal to or more than half of the capacity C of the assembled battery 4 (Step S9). In a case in which the average amount of electric power used P_{EA} is equal to or more than half of the capacity C of the assembled battery 4 (Step S9; Yes), the residual capacity C_{R} of the assembled battery 4 at the charging starting time is just less than half of the full capacity C of the assembled battery 4 so that there is a concern in that, if the assembled battery 4 will not be charged, electric power would be insufficient in the discharging mode of the next day. Therefore, the correction control unit 33 moves to Step S4 and fully charges the assembled battery 4.

In addition, in a case in which the average amount of electric power used P_{EA} is less than half of the capacity C of the assembled battery 4 (Step S9; No), if the assembled battery 4 is fully charged, there is a possibility that just less than half of the electric power will be used. In this case, the correction control unit 33 determines whether the average amount of electric power used P_{EA} with the standard deviation σ added thereto is equal to or more than half of the capacity C (Step S10). A value of "the average amount of electric power used P_{EA} + the standard deviation σ" refers to a value of the average value with the standard deviation added thereto and is equivalent to the estimated value of electric power used in the discharging mode of the next day. By adding the standard deviation σ, the estimated value is set to a value taking the variation in the amount of electric power used daily into consideration so that the estimated value does not become a value excessively lower than the actual amount of electric power used.

In a case in which the value of "the average amount of electric power used P_{EA} + the standard deviation σ" is less than half of the capacity C (Step S10; No), it may be possible to suppress electric power used for charging the assembled battery 4. In this case, the correction control unit 33 determines whether the average amount of electric power used P_{EA} with the standard deviation σ and the minimum residual amount α of the assembled battery 4 added thereto is equal to or less than the residual capacity C_{R} at the charging starting time (Step S11). The correction control unit 33 adds the minimum residual amount α when performing the comparison in order to prevent the depth of discharging of the assembled battery 4 from excessively deepening. Here, in a case in which the sum of "the average amount of electric power used P_{EA} + the standard deviation σ + the minimum residual amount α" is equal to or less than the residual capacity C_{R} (Step S11; Yes), since the residual capacity C_{R} of the assembled battery 4 is sufficient with respect to the estimated value of the amount of electric power used for the next day, the correction control unit 33 controls the power storage unit 3 and the charger 34 not to perform charging of the assembled battery 4. After that, the control apparatus 30 moves to Step S5 so as to detect the residual capacity C_{S} and store the C_{S} stored in the memory unit 30a, and then moves to the discharging mode.

Meanwhile, in Step S11, the correction control unit 33 may not only compare the residual capacity C_{R} and the sum of "the average amount of electric power used P_{EA} + the standard deviation σ + the minimum residual amount α" but also simply determine whether the residual capacity C_{R} is equal to or more than half of the capacity C. In this case, since the residual capacity C_{R} is evidently larger than the estimated value of the amount of electric power used for the next day, the correction control unit 33 moves to Step S12 and performs a control of not performing charging of the assembled battery 4.

In addition, in a case in which the sum of "the average amount of electric power used P_{EA} + the standard deviation σ + the minimum residual amount α" exceeds the residual capacity C_{R} (Step S11; No), since the residual capacity C_{R} of the assembled battery 4 is insufficient with respect to the estimated value of the amount of electric power used for the next day, the correction control unit 33 moves to Step S4 and fully charges the assembled battery 4.

On the other hand, in a case in which the average amount of electric power used P_{EA} is less than half of the capacity C of the assembled battery 4 (Step S9; No) and the sum of "the average amount of electric power used P_{EA} + the standard deviation σ" is equal to or more than half of the capacity C (Step S10; Yes), the residual capacity C_{R} is insufficient with respect to the estimated value of the amount of electric power used for the next day, and the short amount is smaller than twice the standard deviation σ. Since there is a possibility that the amount of electric power used in the discharging mode of the corresponding day will vary as much as the standard deviation σ from the average amount of electric power used P_{EA}, it is desirable to calculate the residual amount C_{R} to be reduced as much as "the average amount of electric power used P_{EA} + the standard deviation σ" in consideration of preventing electric power shortage. In addition, since the estimated value of the amount of electric power used in the discharging mode of the next day is the sum of "the average amount of electric power used P_{EA} + the standard deviation σ", in order to make the residual capacity C_{R} of the assembled battery 4 larger than the estimated value of the amount of electric power used in the discharging mode of the next day, it is necessary to charge the assembled battery 4 with electric power as much as twice the standard deviation σ. Therefore, the correction control unit 33 charges the assembled battery 4 with an amount of electric power as much as twice the standard deviation σ (Step S 13) and moves to Step 5.

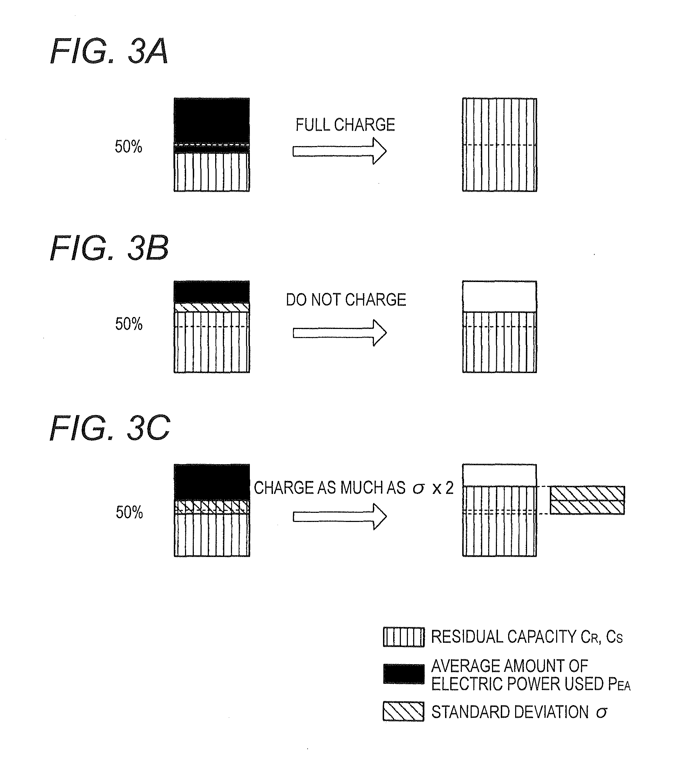

Figs. 3A to 3C are schematic views illustrating specific examples of charging operations performed by the power storage system 1 with controls of the correction control unit 33. In Figs. 3A to 3C, the residual capacities C_{R} and C_{S}, average amount of electric power used P_{EA} and standard deviation σ of the assembled battery 4 are respectively expressed by hatched rectangular areas.

In a case in which the average amount of electric power used P_{EA} is equal to or more than half of the full capacity C of the assembled battery 4, the estimated value of the amount of electric power used in the discharging mode of the next day also becomes equal to or more than half of the capacity C. Therefore, as shown in Fig. 3A, since the residual capacity C_{R} at the charging starting time is evidently insufficient compared to the amount of electric power used for the next day, the correction control unit 33 fully charges the assembled battery 4 in Step S4.

In addition, in a case in which the sum of the average amount of electric power used P_{EA} and the standard deviation σ is less than half of the capacity C and the residual capacity C_{R} is larger than a value of the sum with the minimum residual amount α added thereto, the residual capacity C_{R} is evidently larger than the estimated value of the amount of electric power used in the discharging mode of the next day. In this case, as shown in Fig. 3B, the correction control unit 33 moves to the discharging mode without charging the assembled battery 4 in Step S12.

Furthermore, in a case in which the average amount of electric power used P_{EA} is less than half of the capacity C of the assembled battery 4 and a value of the average amount of electric power used P_{EA} + the standard deviation σ is equal to or more than half of the capacity C, as shown in Fig. 3C, the residual capacity C_{R} is insufficient with respect to the estimated value of the amount of electric power used for the next day, but the short amount is smaller than twice the standard deviation σ. In this case, if electric power as much as twice the standard deviation σ is charged as shown in Fig. 3C, the residual capacity C_{S} becomes larger than the estimated value of the amount of electric power used in the discharging mode of the next day. Therefore, the correction control unit 33 charges the assembled battery 4 with an amount of electric power as much as twice the standard deviation σ in Step S13.

As shown above, according to the power storage system 1 according to the embodiment to which the present invention is applied, the power storage system 1 including: the assembled battery 4 which is chargeable and dischargeable and is comprised of a plurality of battery modules 41; the control apparatus 30 that controls the power storage system 1 to perform a charging mode in which the assembled battery 4 is charged in a first predetermined time period and a discharging mode in which the assembled battery 4 is discharged in a second predetermined time period; the residual electric power amount determination unit 31 that detects the amount of electric power currently remained in the assembled battery 4; the discharged electric power amount determination unit 32 that detects the amount of electric power discharged from the assembled battery 4 during the second predetermined period in which the discharging mode is performed. The control apparatus 30 estimates the amount of electric power discharged from the assembled battery 4 during a next second predetermined time period in which the discharging mode is to be performed based on amounts of electric power having been discharged from the assembled battery 4 during past second predetermined time period in which the discharging mode has been performed, detected by the discharged electric power amount determination unit 32. The correction control unit 33 controls the power storage system 1 not to perform the charging mode in a next first predetermined time period if the estimated value is less than the amount of electric power currently remained in the assembled battery 4, detected by the residual electric power amount determination unit 31. That is, in the power storage system 1, the control apparatus 30 estimates an amount of electric power to be discharged in the discharging mode for the next day based on the residual capacity C_{R} of the assembled battery 4 which has been obtained by the residual electric power amount determination unit 31, and, in a case in which the estimated value is less than the residual amount of electric power in the assembled battery 4, the correction control unit 33 controls the power storage system 1 not to perform charging even at the next first predetermined time period in which the charging mode is to be performed. Therefore, it is possible to optimize the amount of electric power to be charged in the assembled battery 4 by suppressing the amount of electric power to be charged according to electric power demand of the discharging mode. In addition, it is possible to reduce the number of times of charging the assembled battery 4, thereby achieving a longer service life of the assembled battery 4, and the charger 34 and the rectifier circuit 35 which constitute the charging circuit for charging the assembled battery 4.

According to the embodiment, the control apparatus 30 controls the power storage system 1 to alternately perform the charging mode and the discharging mode. Thus, it is possible to effectively optimize the amount of electric power to be charged in the charging mode by estimating the amount of electric power to be discharged in the next discharging mode.

According to the embodiment, the first predetermined time period in which the charging mode is to be performed is overlapped with at least a time period in nighttime. For example, the charging mode is performed from 11 pm to 7 am or from 10 pm to 8 am.

Furthermore, the correction control unit 33 adds a minimum residual amount α of assembled battery 4 to the estimated value of the amount of electric power used in the discharging mode of the next day and then compares the sum with the residual capacity C_{R} charged in the assembled battery 4. Thus, the necessity of charging is determined with an assumption of ensuring the minimum residual amount α. Thereby, it is possible to postpone degradation of the assembled battery 4 and thus achieve a longer service life.

In addition, the correction control unit 33 can also control the power storage system 1 not to perform the charging mode in the next first predetermined time period when the residual capacity C_{R} of the assembled battery 4, determined by the residual electric power amount determination unit 31 is equal to or more than half of the full capacity C of the fully charged assembled battery 4. In this case, it is possible to rapidly determine the necessity of charging simply by performing calculation of a light load.

According to the embodiment, the discharge electric power amount determination unit 32 detects the amount of electric power used P_{E} discharged during the discharging mode of the corresponding day based on the residual capacity C_{S} at the beginning of the second predetermined time period in which the discharging mode is performed, detected by the residual electric power amount determination unit 31, that is, when finishing the charging mode, and the residual capacity C_{R} at the end of the second predetermined time period in which the discharging mode is performed, detected by the residual electric power amount determination unit 31, that is, when starting the charging mode. The control apparatus 30 obtains the estimated value of the amount of electric power used in the discharging mode for the next day based on the average amount of electric power used P_{EA} which is an average value of the amounts of electric power used P_{E} having been discharged from the assembled battery during the past second predetermined time periods for the recent several days (for example, 7 days), detected by the discharged electric power amount determination unit 32 and the standard deviation σ thereof. Thus, it is possible to accurately and rapidly obtain the amount of electric power used during the day time period in which the discharging mode is performed while reflecting variation due to the seasons or the like. Thereby, it is possible to accurately determine whether the amount of electric power used for the discharging mode of the next day can be supplied without performing charging and to suppress the charging amount and the number of times of charging the assembled battery 4 efficiently without causing electric power shortages of the assembled battery 4 in the discharging mode.

According to the embodiment, the power storage system 1 includes the charging circuit constituted of the charger 34 and the rectifier circuit 35 which are used for charging the assembled battery 4 from the system 11, and at least one of the DC/AC converter 36 that converts electric power charged in the assembled battery 4 to an alternating current with a frequency corresponding to the AC load 13 and then supplies the alternating current to the AC load 13, and the DC/DC converter 37 that converts electric power charged in the assembled battery 4 to a voltage corresponding to the DC load 14 and then supplies the voltage to the DC load 14. The power storage system 1 repeatedly performs the charging mode and the discharging mode. Thus, it is possible to perform the peak cut of power consumption by charging the assembled battery 4 during time periods in which electric power demand is lowered and supplying electric power from the charged electric power during time periods with a high electric power demand, such as daytime or the like.

Thus far, the present invention has been described based on the embodiment, but the above embodiment simply shows specific examples of application; therefore the present invention is not limited thereto. For example, the above embodiment describes an example in which the amount of electric power used P_{E} in the discharging mode is obtained from the residual capacity C_{R} and residual capacity C_{S} of the assembled battery 4, and an estimated value of the amount of electric value used for the next day is obtained based on the amount of electric power used P_{E}, but the present invention is not limited thereto. It is also possible to have a configuration in which the amount of electric current used in the discharging mode is obtained, and thus an estimated value of the amount of electric current used for the next day is obtained based on the amount of electric current used. In addition, the above embodiment described an example in which the residual capacity C_{R} and residual capacity C_{S} of the assembled battery 4 are obtained by the control apparatus 30 included in the power storage unit 3 so as to obtain the amount of electric power used P_{E} in the discharging mode; an estimated value of the amount of electric power used for the next day is obtained based on the amount of electric power used P_{E}; and the necessity of charging the assembled battery 4 is determined so as to control charging operations, but the present invention is not limited thereto. It is also possible to perform a variety of the above processes with a control apparatus provided in the power storage system 1, separately from the power storage unit 3, and to perform a variety of the above processes with a remote control apparatus which is connected with the power storage system 1 through communication lines. Furthermore, it is also possible to have a configuration in which a power generation apparatus, such as a solar power generation apparatus, a gas engine-driven power generation apparatus or the like, is connected to the commercial electric power system 11 provided in the power storage system 1, and it is needless to say that arbitrary variations can be made with regard to other parts of the detailed configuration or the like of the power storage system 1.

## Claims

1. A power storage system, comprising:
an assembled battery which is chargeable and dischargeable and is comprised of a plurality of battery modules;
a control apparatus that controls the power storage system to perform a charging mode in which the assembled battery is charged in a first predetermined time period and a discharging mode in which the assembled battery is discharged in a second predetermined time period;
a residual electric power amount determination unit that detects an amount of one of electric current and electric power currently remaining in the assembled battery; and
a discharged electric power amount determination unit that detects an amount of one of electric current and electric power discharged from the assembled battery during the second predetermined time period in which the discharging mode is performed,
wherein the control apparatus estimates an amount of one of electric current and electric power being charged to the assembled battery during a next first predetermined time period in which the charging mode is to be performed based on amounts of one of electric current and electric power having been discharged from the assembled battery during past second predetermined time periods in which the discharging mode has been performed, detected by the discharged electric power amount determination unit to obtain an estimated value, and
wherein the power storage system further comprises a correction control unit that controls the power storage system not to perform the charging mode in a next first predetermined time period if the estimated amount is less than the amount of one of electric current and electric power currently remaining in the assembled battery, detected by the residual electric power amount determination unit.

2. The power storage system as set forth in claim 1, wherein the control apparatus controls the power storage system to alternately perform the charging mode and the discharging mode.

3. The power storage system as set forth in claim 2, wherein the first predetermined time period is overlapped with at least a time period in nighttime.

4. The power storage system as set forth in claim 2, wherein the correction control unit adds a minimum value of an amount of one of electric current and electric power to be remained in the assembled battery to the estimated amount and then compares the sum with the amount of one of electric current and electric power currently remaining in the assembled battery.

5. The power storage system as set forth in claim 3, wherein the correction control unit controls the power storage system not to perform the charging mode in the next first predetermined time period if the amount of one of electric current and electric power currently remaining in the assembled battery, detected by the residual electric power amount determination unit is equal to or more than half of a full capacity of the assembled battery.

6. The power storage system as set forth in claim 4 or 5,
wherein the discharged electric power amount determination unit detects the amount of one of electric current and electric power discharged from the assembled battery during the second predetermined time period based on the amount of one of electric current and electric power remaining in the assembled battery at the beginning of the second predetermined time period, detected by the residual electric power amount determination unit and the amount of one of electric current and electric power remaining in the assembled battery at the end of the first predetermined time period, detected by the residual electric power amount determination unit, and
wherein the control apparatus obtains the estimated value based on an average value of the amounts of one of electric current and electric power having been discharged from the assembled battery during the past second predetermined time periods, detected by the discharged electric power amount determination unit and a standard deviation thereof.

7. The power storage system as set forth in any of claims 4 to 6, further comprising:
a charging circuit that charged the assembled battery with electric power supplied from a system; and
at least one of a conversion circuit that converts the electric power charged in the assembled battery to an alternating current with a frequency corresponding to an alternating load and then supplies the alternating current to the alternating load, and a conversion circuit that converts the electric power charged in the assembled battery to a voltage corresponding to a direct load and then supplies the voltage to the direct load,
wherein the power storage system repeatedly performs the charging mode and the discharging mode.
